(19) Europäisches Patentamt
European Patent Office
Office européen des brevets

(11) **EP 4 353 795 A1**

(12) **EUROPEAN PATENT APPLICATION**
published in accordance with Art. 153(4) EPC

(43) Date of publication:
**17.04.2024 Bulletin 2024/16**

(21) Application number: **22820237.0**

(22) Date of filing: **08.06.2022**

(51) International Patent Classification (IPC):
***C09J 11/08*** (2006.01) ***C09J 107/00*** (2006.01)
***C09J 109/00*** (2006.01) ***C09J 109/02*** (2006.01)
***C09J 109/06*** (2006.01) ***C09J 111/00*** (2006.01)
***C09J 123/16*** (2006.01) ***C09J 123/22*** (2006.01)
***C09J 153/02*** (2006.01)

(52) Cooperative Patent Classification (CPC):
**C09J 11/08; C09J 107/00; C09J 109/00; C09J 109/02; C09J 109/06; C09J 111/00; C09J 123/16; C09J 123/22; C09J 153/02**

(86) International application number:
**PCT/JP2022/023047**

(87) International publication number:
**WO 2022/260058 (15.12.2022 Gazette 2022/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.06.2021 JP 2021096744**

(71) Applicant: **Kuraray Co., Ltd.**
**Kurashiki-shi, Okayama 710-0801 (JP)**

(72) Inventors:
- **UENO, Yoshikazu**
  **Kamisu-shi, Ibaraki 314-0197 (JP)**
- **UEHARA, Yosuke**
  **Kamisu-shi, Ibaraki 314-0197 (JP)**
- **KODA, Daisuke**
  **Tokyo 100-0004 (JP)**

(74) Representative: **Müller-Boré & Partner Patentanwälte PartG mbB**
**Friedenheimer Brücke 21**
**80639 München (DE)**

# (54) ADHESIVE COMPOSITION

(57) An adhesive composition containing, at least one solid rubber (A) selected from the group consisting of a natural rubber, a polyisoprene rubber, a polybutadiene rubber, a styrene-butadiene copolymer rubber, a styrene-isoprene copolymer rubber, an acrylonitrile-butadiene copolymer rubber, a chloroprene rubber, an ethylene-propylene rubber, and a butyl rubber, and
5 to 250 parts by mass of a liquid farnesene-based rubber (B) and 10 to 500 parts by mass of a tackifier resin (C), relative to 100 parts by mass of the solid rubber (A),
in which the liquid farnesene-based rubber (B) meets the following requirements (I) and (II):
(I) a melt viscosity measured at 38°C is in a range of 0.1 to 3,000 Pa·s; and
(II) when a measurement is performed through a gel permeation chromatography (GPC), a maximum peak-molecular weight (Mt) is 3,000 to 200,000 and a molecular weight distribution (Mw/Mn) is 1.0 to 1.4.

EP 4 353 795 A1

## Description

Technical Field

The present invention relates to an adhesive composition containing a liquid farnesene-based rubber, and an adhesive obtained by using the adhesive composition.

Background Art

A technique (for example, PTL 1) using a polyfamesene for an adhesive composition, and a technique (for example, PTLs 2 and 3) using a solid rubber and a liquid rubber for an adhesive composition are known. It is also known to blend a plasticizer or the like in an adhesive composition since the adhesive composition is required to be excellent in processability and handleability, in addition to adhesiveness. However, when blending a process oil or a liquid paraffin generally used as a plasticizer, there is a problem in which the plasticizer tends to cause a decrease in adhesiveness and a bleeding-out.

Citation List

Patent Literature

PTL 1: JP2012-502135T

PTL 2: JP2015-086281A

PTL 3: JP2015-105277A

Summary of Invention

Technical Problem

In PTL 1, the problem caused by the plasticizer or the like is not studied. In PTLs 2 and 3, adhesiveness and bleed-out resistance are improved, but further improvement is actually required. Furthermore, the adhesive composition is desired to have various characteristics in addition to adhesiveness and bleed-out resistance.

For example, when an adhesive sheet is to be reattached, an adherend is stained with an adhesive in a case of poor peelability. Also, the adhesive composition may be required to have a characteristic of transferring an adhesive layer to an adherend as in an adhesive-transfer sheet. In this manner, the adhesive composition may be desired to have excellent adhesiveness and bleed-out resistance, and also to have peelability and transferability at the same time.

Accordingly, the present invention provides an adhesive composition excellent in adhesiveness and bleed-out resistance, and capable of exhibiting peelability and transferability depending on a temperature condition.

Solution to Problem

As a result of diligent study to solve the above problems, the present inventors have come up with the present invention described below, and found that it can solve the problems.

That is, the present invention is as below.

[1] An adhesive composition comprising, at least one solid rubber (A) selected from the group consisting of a natural rubber, a polyisoprene rubber, a polybutadiene rubber, a styrene-butadiene copolymer rubber, a styrene-isoprene copolymer rubber, an acrylonitrile-butadiene copolymer rubber, a chloroprene rubber, an ethylene-propylene rubber, and a butyl rubber, and

5 to 250 parts by mass of a liquid farnesene-based rubber (B) and 10 to 500 parts by mass of a tackifier resin (C), relative to 100 parts by mass of the solid rubber (A),
in which the liquid farnesene-based rubber (B) meets the following requirements (I) and (II):

(I) a melt viscosity measured at 38°C is in a range of 0.1 to 3,000 Pa s; and

(II) when a measurement is performed through a gel permeation chromatography (GPC), a maximum peak-molecular weight (Mt) is 3,000 to 200,000 and a molecular weight distribution (Mw/Mn) is 1.0 to 1.4.

[2] The adhesive composition according to the above [1], in which the liquid farnesene-based rubber (B) has a residual catalyst amount derived from a polymerization catalyst used for producing the liquid farnesene-based rubber (B) of 0 to 200 ppm by mass in terms of a metal.
[3] The adhesive composition according to the above [1] or [2], in which the liquid farnesene-based rubber (B) has the maximum peak-molecular weight (Mt) of 60,000 or more.
[4] The adhesive composition according to any one of the above [1] to [3], in which the liquid farnesene-based rubber (B) comprises a monomer unit (a) derived from a farnesene in an amount of 50% by mass or more.
[5] The adhesive composition according to any of claims [1] to [4], further comprising 1 to 200 parts by mass of a plasticizer relative to 100 parts by mass of the solid rubber (A).
[6] The adhesive composition according to any one of the above [1] to [5], in which the solid rubber (A) is a natural rubber.
[7] The adhesive composition according to any one of the above [1] to [5], in which the solid rubber (A) is at least one selected from the group consisting of a polybutadiene rubber and a styrene-butadiene copolymer rubber.
[8] An adhesive obtained by using, in at least a part of the adhesive, the adhesive composition according to any of the above [1] to [7].

Advantageous Effects of Invention

According to the present invention, an adhesive composition can be provided, the composition being excellent in adhesiveness and bleed-out resistance, and capable of exhibiting peelability and transferability depending on a temperature condition.

Description of Embodiments

Explanations are provided below based on an exemplary embodiment of the present invention. Note that the embodiment indicated below is an example to embody the technical concept of the present invention, and the present invention is not limited to the descriptions below.
The present description indicates favorable forms of the embodiment, and combinations of two or more of each favorable forms are also favorable forms. When an item indicated by a numerical range includes plural numerical ranges, lower limit values and upper limit values thereof can be selectively combined to obtain favorable forms.
In the present description, when a numerical range "XX to YY" is described, it means "XX or more and YY or less".

<Adhesive Composition>

The adhesive composition of the present embodiment is characterized in that the composition contains a solid rubber (A) (hereinafter, also sometimes mentioned as an "(A) component"), a liquid farnesene-based rubber (B) (hereinafter, also sometimes mentioned as a "(B) component"), and a tackifier resin (C) (hereinafter, also sometimes mentioned as a "(C) component") at a specific ratio, and the liquid farnesene-based rubber (B) meets the following requirements (1) and (II):

(I) a melt viscosity measured at 38°C is in a range of 0.1 to 3,000 Pa s; and
(II) when a measurement is performed through a gel permeation chromatography (GPC), a maximum peak-molecular weight (Mt) is 3,000 to 200,000 and a molecular weight distribution (Mw/Mn) is 1.0 to 1.4.

The (A) component and the (B) component have a good compatibility with each other. The good compatibility can be an advantageous element in order to achieve an adhesive composition excellent in adhesiveness and bleed-out resistance, with a formula containing the (B) component under specific requirements in addition to the (A) component and the (C) component. In addition, by containing the (B) component meeting the above requirements, an adhesive layer can be peeled off substantially without glue residue at a room temperature of about 23°C, and the adhesive layer can be transferred to an adherend by heating at about 60°C.
That is, the present inventors have found that the above-described formula is effective in order that an adhesive composition becomes excellent in adhesiveness and bleed-out resistance, and exhibits peelability and transferability.

[Solid Rubber (A)]

The solid rubber (A) is a rubber handleable in a solid state, and a rubber having a Mooney viscosity ($ML_{1+4}$) at 100°C in a range of normally 20 to 200.

The (A) component is at least one selected from the group consisting of a natural rubber, a polyisoprene rubber, a polybutadiene rubber, a styrene-butadiene copolymer rubber, a styrene-isoprene copolymer rubber, an acrylonitrile-butadiene copolymer rubber, a chloroprene rubber, an ethylene-propylene rubber, and a butyl rubber. Among these, from the viewpoint of adhesiveness and bleed-out resistance, the (A) component is preferably a natural rubber, a polybutadiene rubber, a styrene-butadiene copolymer rubber, and a styrene-isoprene copolymer rubber (especially a styrene-isoprene-styrene block copolymer rubber), and more preferably a natural rubber, a polybutadiene rubber, and a styrene-butadiene copolymer rubber.

The (A) component has a weight-average molecular weight (Mw) of preferably 80,000 or more and more preferably 100,000 to 3,000,000, from the viewpoint of sufficiently exerting the characteristics of the obtained adhesive composition.

The weight-average molecular weight in the present description means a polystyrene-equivalent weight-average molecular weight measured through a gel permeation chromatography (GPC).

(Natural Rubber)

Examples of the natural rubber include natural rubbers generally used in the present technical field such as TSR (technically specified rubber) including SMR (TSR produced in Malaysia), SIR (TSR produced in Indonesia), STR (TSR produced in Thailand), and the like, and RSS (ribbed smoked sheet); and modified natural rubbers such as high-purity natural rubbers, epoxidized natural rubbers, hydroxylated natural rubbers, hydrogenated natural rubbers, and grafted natural rubbers. Among these, SMR20, STR20 and RSS#1 are preferred from the viewpoints of a less variation in quality and a good availability. These natural rubbers may be used alone or in combination of any two or more thereof.

(Polyisoprene Rubber)

As the polyisoprene rubber, a commercially available polyisoprene rubber can be used, which is obtained, for example, by the polymerization using a Ziegler-based catalyst such as a titanium tetrahalide-trialkyl aluminum-based catalyst, a diethyl aluminum chloride-cobalt-based catalyst, a trialkyl aluminum-boron trifluoride-nickel-based catalyst, and a diethyl aluminum chloride-nickel-based catalyst; a lanthanoid-based rare earth metal catalyst such as a triethyl aluminum-organic acid neodymium salt-Lewis acid-based catalyst; or an organic alkali metal compound as used similarly for production of a solution-polymerized styrene-butadiene copolymer rubber. Polyisoprene rubbers obtained by the polymerization using the Ziegler-based catalyst are preferred because of a high cis-isomer content thereof. Polyisoprene rubbers having an ultrahigh cis-isomer content which are obtained using the lanthanoid-based rare earth metal catalyst may also be used.

The polyisoprene rubber has a vinyl content of preferably 50 mol% or less, more preferably 40 mol% or less, and further preferably 30 mol% or less. When the vinyl content is 50 mol% or less, a retentivity of the adhesive composition is less likely to be reduced. The lower limit of the vinyl content is not particularly limited.

A glass transition temperature of the polyisoprene rubber obtained by differential thermal analysis may vary depending on the vinyl content, and is preferably -20°C or less and more preferably -30°C or less.

The polyisoprene rubber has a weight-average molecular weight (Mw) of preferably 90,000 to 2,000,000 and more preferably 150,000 to 1,500,000. When the Mw falls within the above ranges, molding processability and mechanical strength become good.

The polyisoprene rubber may partially have a branched structure or may partially contain a polar functional group by using a multifunctional type modifying reagent, for example, a modifying reagent such as tin tetrachloride, silicon tetrachloride, an alkoxysilane containing an epoxy group in a molecule thereof, or an amino group-containing alkoxysilane, within a range not impairing the effects of the present invention.

(Polybutadiene Rubber)

As the polybutadiene rubber, a commercially available polybutadiene rubber can be used, which is obtained, for example, by the polymerization using a Ziegler-based catalyst such as a titanium tetrahalide-trialkyl aluminum-based catalyst, a diethyl aluminum chloride-cobalt-based catalyst, a trialkyl aluminum-boron trifluoride-nickel-based catalyst, and a diethyl aluminum chloride-nickel-based catalyst; a lanthanoid-based rare earth metal catalyst such as a triethyl aluminum-organic acid neodymium salt-Lewis acid-based catalyst; or an organic alkali metal compound as used similarly for production of a solution-polymerized styrene-butadiene copolymer rubber. Polybutadiene rubbers obtained by the

polymerization using the Ziegler-based catalyst are preferred because of a high cis-isomer content thereof. Polybutadiene rubbers having an ultrahigh cis-isomer content which are obtained using the lanthanoid-based rare earth metal catalyst may also be used.

The polybutadiene rubber has a vinyl content of preferably 50 mol% or less, more preferably 40 mol% or less, and further preferably 30 mol% or less. When the vinyl content is 50 mol% or less, a retentivity of the adhesive composition is less likely to be reduced. The lower limit of the vinyl content is not particularly limited.

A glass transition temperature of the polybutadiene rubber obtained by differential thermal analysis may vary depending on the vinyl content, and is preferably -40°C or less and more preferably -50°C or less.

The polybutadiene rubber has a weight-average molecular weight (Mw) of preferably 90,000 to 2,000,000 and more preferably 150,000 to 1,500,000. When the Mw falls within the above ranges, molding processability and mechanical strength become good.

The polybutadiene rubber may partially have a branched structure or may partially contain a polar functional group by using a polyfunctional type modifying reagent, for example, a modifying reagent such as tin tetrachloride, silicon tetrachloride, an alkoxysilane containing an epoxy group in a molecule thereof, or an amino group-containing alkoxysilane, within a range not impairing the effects of the present invention.

(Styrene-Butadiene Copolymer Rubber)

<Styrene-Butadiene Random Copolymer Rubber>

As the styrene-butadiene copolymer rubber (hereinafter, also mentioned as "SBR"), appropriate ones can be used depending on the application or the like, and a styrene-butadiene random copolymer rubber is preferred. A styrene content of the SBR is not particularly limited as long as the SBR is solid. Meanwhile, from the viewpoints of adhesiveness and molding processability, the styrene content of the SBR is preferably 0.1 to 70% by mass, more preferably 5 to 50% by mass, and further preferably 15 to 35% by mass.

In the SBR, the bonding mode of the butadiene unit may be 1,2-bond or 1,4-bond.

The SBR has a vinyl content of preferably 0.1 to 60 mol% and more preferably 0.1 to 55 mol%. Here, the "vinyl content" in the case of SBR means a content of 1,2-bonding unit.

The styrene content of the SBR and the vinyl content in the present invention can be obtained from $^1$H-NMR spectrum.

The SBR has a weight-average molecular weight (Mw) of preferably 100,000 to 2,500,000, more preferably 150,000 to 2,000,000, and further preferably 200,000 to 1,500,000. When the Mw falls within the above ranges, both molding processability and mechanical strength can be achieved.

A glass transition temperature of the SBR used in the present invention, obtained by differential thermal analysis is preferably -95 to 0°C and more preferably -95 to -5°C. By setting the glass transition temperature to fall within the above ranges, viscosity increase can be inhibited and the handling becomes easier.

The SBR that can be used in the present invention can be obtained by a copolymerization of styrene and butadiene. The production method of SBR is not particularly limited and any of emulsion polymerization method, solution polymerization method, vapor phase polymerization method, and bulk polymerization method can be used. Among these production methods, emulsion polymerization method and solution polymerization method are preferred.

An emulsion-polymerized styrene-butadiene copolymer rubber (hereinafter, also sometimes mentioned as an "E-SBR") can be produced by a normal emulsion polymerization method known or equivalent thereof. For example, predetermined amounts of styrene monomer and butadiene monomer are emulsified and dispersed in the presence of an emulsifying reagent, followed by subjecting to emulsion polymerization using a radical polymerization initiator to obtain the E-SBR.

A solution-polymerized styrene-butadiene copolymer rubber (hereinafter, also sometimes mentioned as an "S-SBR") can be produced by a normal solution polymerization method. For example, styrene and butadiene are polymerized in a solvent using an anion-polymerizable active metal, and in the presence of a polar compound if required, to obtain the S-SBR.

Examples of the solvent include aliphatic hydrocarbons such as n-butane, n-pentane, isopentane, n-hexane, n-heptane, and isooctane; alicyclic hydrocarbons such as cyclopentane, cyclohexane, and methyl cyclopentane; and aromatic hydrocarbons such as benzene and toluene. Normally, these solvents are preferably used in a range in which a monomer concentration therein becomes 1 to 50% by mass.

Examples of the anion-polymerizable active metal include alkali metals such as lithium, sodium, and potassium; alkali earth metals such as beryllium, magnesium, calcium, strontium, and barium; and lanthanoid-based rare earth metals such as lanthanum and neodymium. Among these active metals, alkali metals and alkali earth metals are preferred, and alkali metals are more preferred. Among alkali metals, organic alkali metal compounds are preferred.

Examples of the organic alkali metal compounds include organic monolithium compounds such as n-butyl

lithium, sec-butyl lithium, t-butyl lithium, hexyl lithium, phenyl lithium, and stilbene lithium; polyfunctional organic lithium compounds such as dilithiomethane, 1,4-dilithiobutane, 1,4-dilithio-2-ethylcyclohexane, and 1,3,5-trilithiobenzene; and sodium naphthalene and potassium naphthalene. Among these, organic lithium compounds are preferred, and organic monolithium compounds are more preferred. The used amount of the organic alkali metal compound may be appropriately determined according to a molecular weight of the S-SBR as required.

The organic alkali metal compound may be used in the form of an organic alkali metal amide by allowing a secondary amine such as dibutyl amine, dihexyl amine, and dibenzyl amine to react therewith.

The polar compound is not particularly limited as long as it is one used normally in the anion polymerization for controlling a microstructure of butadiene moieties and the distribution of styrene in the copolymer chain without causing deactivation of the reaction. Examples of the polar compound include ether compounds such as dibutyl ether, tetrahydrofuran, and ethylene glycol diethyl ether; tertiary amines such as tetramethyl ethylenediamine and trimethylamine; and alkali metal alkoxides and phosphine compounds.

The temperature in the polymerization reaction is in a range of usually -80 to 150°C, preferably 0 to 100°C, and more preferably 30 to 90°C. The polymerization mode may be either a batch mode or a continuous mode. Also, in order to improve a random copolymerizability between styrene and butadiene, the styrene and butadiene are preferably supplied to the reaction solution in a continuous or intermittent manner such that a compositional ratio between the styrene and the butadiene in the polymerization system falls within a specific range.

The polymerization reaction can be stopped by an an addition of an alcohol such as methanol and isopropanol as a polymerization terminating reagent. The polymerization solution obtained after stopping the polymerization reaction can be directly subjected to separation by drying or steam stripping to recover the S-SBR as aimed. Meanwhile, before removing the solvent, the polymerization solution may be previously mixed with an extender oil to recover the S-SBR in the form of an oil-extended rubber.

As the SBR, a modified SBR obtained by introducing a functional group into SBR may be used within a range not impairing the effects of the present invention. Examples of the functional group include an amino group, an alkoxysilyl group, a hydroxy group, an epoxy group, and a carboxy group.

As the production method of the modified SBR, there may be used, for example, a method in which before adding the polymerization terminating reagent, a coupling reagent such as tin tetrachloride, tetrachlorosilane, dimethyl dichlorosilane, dimethyl diethoxysilane, tetramethoxysilane, tetraethoxysilane, 3-aminopropyl triethoxysilane, tetraglycidyl-1,3-bis aminomethyl cyclohexane, and 2,4-tolylene diisocyanate which are capable of reacting with a polymerization active end; a polymerization end-modifying reagent such as 4,4'-bis(diethylamino)benzophenone and N-vinyl pyrrolidone; or the other modifying reagent as described in JP2011-132298A is added to the polymerization reaction system.

In the modified SBR, the site of the polymer into which the functional group is introduced may be either a polymerization end or a side chain of the polymer chain.

<Styrene-Butadiene-Styrene Block Copolymer Rubber>

Examples of the SBR include, in addition to the styrene-butadiene random copolymer rubber, a styrene-butadiene-styrene block copolymer rubber (hereinafter, also sometimes mentioned as an "SBS").

Examples of the SBS include "Kraton (registered trademark) D SBS" (trade name) manufactured by Kraton Polymers, "Tufprene (registered trademark)" (trade name) and "Asaprene (registered trademark) T" (trade name) manufactured by Asahi Kasei Chemicals Corporation, and "JSR TR" (trade name) manufactured by JSR Corporation.

(Styrene-isoprene Copolymer Rubber)

Examples of the styrene-isoprene copolymer rubber include a styrene-isoprene-styrene block copolymer rubber (hereinafter, also sometimes mentioned as an "SIS").

Examples of the SIS include "Kraton (registered trademark) D SIS" (trade name) manufactured by Kraton Polymers, "JSR SIS" (trade name) manufactured by JSR Corporation, and "Quintac (registered trademark)" (trade name) manufactured by Zeon Corporation.

As the polyisoprene rubber, the polybutadiene rubber, the styrene-butadiene copolymer rubber, the styrene-isoprene copolymer rubber, the acrylonitrile-butadiene copolymer rubber, the chloroprene rubber, the ethylene-propylene rubber (EPM, EPDM, etc.), and the butyl rubber, commercially available products can be used without particular limitations.

[Liquid Farnesene-Based Rubber (B)]

The liquid farnesene-based rubber (B) is a rubber handleable in a liquid state. By containing the (B) component, the adhesive composition can exhibit excellent adhesiveness and bleed-out resistance, and peelability and transferability

depending on a temperature condition.

The (B) component may be used alone or in combination of any two or more thereof.

<Monomer Unit (a)>

The (B) component is a liquid polymer containing a monomer unit (a) derived from farnesene (hereinafter, also sometimes simply mentioned as a "monomer unit (a)").

The monomer unit (a) may be a monomer unit derived from α-farnesene, may be a monomer unit derived from β-famesene represented by the following formula (I), or may contain the monomer unit derived from α-farnesene and the monomer unit derived from β-farnesene. From the viewpoint of production easiness, the monomer unit (a) preferably contain the monomer unit derived from β-farnesene.

The content of the monomer unit derived from β-famesene is, from the viewpoint of production easiness, preferably 80 mol% or more, more preferably 90 mol% or more, and further preferably 100 mol% in the monomer unit (a). Namely, it is further preferred that the entire monomer unit (a) is the monomer unit derived from β-farnesene.

The content of the monomer unit (a) in the (B) component is preferably 50% by mass or more, more preferably 55% by mass or more, and further preferably 60% by mass or more, from the viewpoint of further improving adhesiveness and bleed-out resistance, and peelability and transferability depending on a temperature condition. The upper limit of the content of the monomer unit (a) in the (B) component is not particularly limited, and may be 100% by mass, 99% by mass or less, 90% by mass or less, and 80% by mass or less.

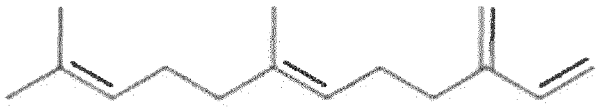

(I)

<Monomer Unit (b)>

The (B) component may be a liquid copolymer containing the monomer unit (a) and a monomer unit (b) derived from a monomer other than farnesene (hereinafter, also sometimes simply mentioned as a "monomer unit (b)").

When the (B) component is a copolymer of the monomer unit (a) and the monomer unit (b), the content of the monomer unit (b) in the (B) component is preferably 50% by mass or less, more preferably 45% by mass or less, and further preferably 40% by mass or less. In the case of the above, the lower limit of the content of the monomer unit (b) in the (B) component is not particularly limited, and may be 1% by mass or more, 10% by mass or more, and 20% by mass or more.

The monomer other than farnesene capable of forming the monomer unit (b) is not particularly limited as long as it is copolymerizable with farnesene. Examples of the monomer other than farnesene include aromatic vinyl compounds, conjugated diene compounds other than farnesene, acrylic acid and its derivatives, methacrylic acid and its derivatives, acrylamide and its derivatives, methacrylamide and its derivatives, and acrylonitrile. These monomers other than farnesene may be used alone or in combination of any two or more thereof.

Examples of the aromatic vinyl compounds include styrene; styrene derivatives such as α-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, N,N-diethyl-4-aminoethylstyrene, 4-methoxystyrene, monochlorostyrene, and dichlorostyrene; 1-vinylnaphthalene; 2-vinylnaphthalene; vinylanthracene; and vinylpyridine. Among these, styrene and its derivatives are preferred, and styrene is more preferred. These aromatic vinyl compounds may be used alone or in combination of any two or more thereof.

Examples of the conjugated diene compounds include butadiene, isoprene, 2,3-dimethylbutadiene, 2-phenylbutadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, and chloroprene. Among these, butadiene, isoprene, and myrcene are preferred, and butadiene is more preferred. These conjugated dienes may be used alone or in combination of any two or more thereof.

Examples of the derivatives of acrylic acid include methyl acrylate, ethyl acrylate, n-butyl acrylate, isobutyl acrylate, t-butyl acrylate, 2-ethylhexyl acrylate, isooctyl acrylate, isononyl acrylate, lauryl acrylate, stearyl acrylate, cyclohexyl acrylate, isobornyl acrylate, dicyclopentenyloxyethyl acrylate, tetraethylene glycol acrylate, tripropylene glycol acrylate, 4-hydroxybutyl acrylate, 3-hydroxy-1-adamantyl acrylate, tetrahydrofurfuryl acrylate, methoxyethyl acrylate, and N,N-dimethylaminoethyl acrylate. These derivatives of acrylic acid may be used alone or in combination of any two or more thereof.

Examples of the derivatives of methacrylic acid include methyl methacrylate, ethyl methacrylate, n-butyl methacrylate, isobutyl methacrylate, t-butyl methacrylate, 2-ethylhexyl methacrylate, lauryl methacrylate, tridecyl methacrylate, stearyl methacrylate, cyclohexyl methacrylate, isobornyl methacrylate, dicyclopentanyl methacrylate, benzyl methacrylate, dicyclopentenyloxyethyl methacrylate, 2-hydroxyethyl methacrylate, 2-hydroxypropyl methacrylate, 3-hydroxy-1-adamantyl methacrylate, tetrahydrofurfuryl methacrylate, dimethylaminoethyl methacrylate, diethylaminoethyl methacrylate, and glycidyl methacrylamide methacrylate. These derivatives of methacrylic acid may be used alone or in combination of any two or more thereof.

Examples of the derivatives of acrylamide include dimethylacrylamide, acryloylmorpholine, isopropylacrylamide, diethylacrylamide, dimethylaminopropylacrylamide, dimethylaminopropylacrylamide chloride methyl quaternary salt, hydroxyethylacrylamide, and 2 acrylamide-2-methylpropanesulfonic acid. These derivatives of acrylamide may be used alone or in combination of any two or more thereof.

Examples of the derivatives of methacrylamide include dimethylmethacrylamide, methacryloylmorpholine, isopropylmethacrylamide, diethylmethacrylamide, dimethylaminopropylmethacrylamide, and hydroxyethylmethacrylamide. These derivatives of methacrylamide may be used alone or in combination of any two or more thereof.

Among the monomers other than farnesene, the aromatic vinyl compounds and the conjugated diene compounds other than farnesene are preferred, and the conjugated diene compounds are more preferred.

<Melt Viscosity>

The (B) component has a melt viscosity measured at 38°C falling within a range of 0.1 to 3,000 Pa·s. When the melt viscosity is within the above range, the (B) component can be handled in a liquid state. When the melt viscosity is less than 0.1 Pa·s, adhesiveness decreases. When the melt viscosity is more than 3,000 Pa·s, adhesiveness of the adhesive composition increases, and handleability and coatability deteriorate.

The (B) component has a melt viscosity measured at 38°C of preferably 0.8 to 2,000 Pa s, more preferably 10 to 1,000 Pa·s, and further preferably 10 to 700 Pa s, from the viewpoints in that the preparation of the adhesive composition obtained becomes easier to improve workability, and adhesiveness further improves. When the (B) component contains no monomer unit (b), the melt viscosity may be 10 to 450 Pa s, 10 to 300 Pa·s, 10 to 200 Pa s, and 10 to 100 Pa s.

The melt viscosity of the (B) component is a value obtained by a measurement method described in the later-described Examples.

<Maximum Peak-Molecular Weight (Mt)>

When a measurement is performed through a gel permeation chromatography (GPC), the (B) component has a maximum peak-molecular weight (Mt) of 3,000 to 200,000. When the maximum peak-molecular weight (Mt) of the (B) component is less than 3,000, bleed-out resistance deteriorates. When the maximum peak-molecular weight (Mt) of the (B) component is more than 200,000, adhesiveness of the adhesive composition increases, and handleability and coatability deteriorate.

The (B) component has a Mt of preferably 10,000 or more, more preferably 30,000 or more, further preferably 40,000 or more, further more preferably 50,000 or more, especially preferably 60,000 or more, and most preferably 80,000 or more, from the viewpoints in that the adhesive composition has lower viscosity and the preparation thereof becomes easier to improve workability, and adhesiveness further improves and molding processability becomes excellent. The (B) component has a Mt of preferably 180,000 or less, more preferably 170,000 or less, and further preferably 160,000 or less, from the above viewpoints. The Mt of the (B) component may be 150,000 or less and 100,000 or less.

In the present invention, the Mt of the (B) component is a polystyrene-equivalent maximum peak-molecular weight obtained through a GCP measurement.

<Residual Catalyst Amount>

The (B) component has a residual catalyst amount derived from a polymerization catalyst used for producing the (B) component of preferably 0 to 200 ppm by mass, more preferably 0 to 150 ppm by mass, further preferably 0 to 100 ppm by mass, further more preferably 0 to 50 ppm by mass, and especially preferably 0 to 10 ppm by mass, in terms of a metal. The residual catalyst amount is preferred as close to 0 ppm by mass as possible.

For example, when an organic alkali metal compound such as an organic lithium compound is used as the polymerization catalyst for producing the (B) component, the reference metal for the residual catalyst amount is the alkali metal such as lithium. When the residual catalyst amount falls within the above ranges, the adhesive composition becomes excellent in transparency and the adhesiveness thereof becomes more excellent.

The residual catalyst amount can be measured by using a polarized Zeeman atomic absorption spectrophotometer, for example.

As a method for setting the residual catalyst amount to fall within the specific ranges, there may be used a method of purifying the (B) component after polymerization and sufficiently removing the residual catalyst. As the method

for purifying the (B) component, washing with water or hot water, organic solvents represented by methanol, acetone, etc., or supercritical fluid carbon dioxide is preferred. The number of washings is preferably 1 to 20 times, and more preferably 1 to 10 times, from the economic viewpoint. Washing temperature is preferably 20 to 100°C and more preferably 40 to 90°C. Meanwhile, the residual catalyst amount can be reduced by removing impurities that inhibits polymerization by distillation or with an absorbent before the polymerization reaction to increase the purity of the monomers, and then performing the polymerization, since the necessary amount of the polymerization catalyst can be reduced.

<Weight-Average Molecular Weight (Mw)>

The (B) component has a weight-average molecular weight (Mw) falling in ranges of preferably 2,000 to 500,000, more preferably 4,000 to 300,000, further preferably 6,000 to 200,000, and further more preferably 8,000 to 150,000. When the weight-average molecular weight (Mw) falls within the above ranges, a more excellent peelability, and fluidity and molding processability can be obtained.

<Molecular Weight Distribution (Mw/Mn)>

The (B) component has a molecular weight distribution (Mw/Mn) of 1.0 to 1.4. When the molecular weight distribution of the (B) component is more than 1.4, bleed-out resistance may become poor. The (B) component has a molecular weight distribution (Mw/Mn) of preferably 1.0 to 1.30 and more preferably 1.0 to 1.20, from the viewpoint that the (B) component has a less variation in viscosity thereof and exhibits a more excellent adhesiveness. The molecular weight distribution (Mw/Mn) of the (B) component may be 1.0 to 1.15.

The weight-average molecular weight and the molecular weight distribution of the (B) component are polystyrene-equivalent values obtained through a GPC measurement, according to a method described in the later-described Examples.

<Glass Transition Temperature>

The glass transition temperature (Tg) of the (B) component may vary depending on a bonding mode (microstructure) or the contents of the monomer unit (a) derived from farnesene and the monomer unit (b) other than farnesene used as necessary, and is preferably -100 to +10°C, more preferably -100 to 0°C, and further preferably -100 to -5°C. When the glass transition temperature (Tg) of the (B) component falls within the above ranges, a flexible polymer can be obtained, and molding processability and adhesiveness become more excellent.

The glass transition temperature of the (B) component can be obtained by differential scanning calorimetry method, and in more detail, is obtained by a method described in the later-described Examples.

<Content>

In the adhesive composition, the content of the (B) component relative to 100 parts by mass of the (A) component is 5 to 250 parts by mass. When the content of the (B) component is less than 5 parts by mass, the adhesive composition is difficult to have excellent adhesiveness and peelability. When the content of the (B) component is more than 250 parts by mass, decrease in molding processability and a bleeding-out of the adhesive composition may be caused.

The content of the (B) component relative to 100 parts by mass of the (A) component is preferably 8 parts by mass or more, and more preferably 10 parts by mass or more, from the viewpoint of further improving adhesiveness, and peelability and transferability of the adhesive composition. The content of the (B) component relative to 100 parts by mass of the (A) component is preferably 200 parts by mass of less, more preferably 150 parts by mass or less, and further preferably 100 parts by mass or less, from the viewpoints of molding processability and bleed-out resistance of the adhesive composition, and it may be 60 parts by mass or less from the viewpoint of bleed-out resistance.

[Tackifier Resin (C)]

As the tackifier resin (C) used in the adhesive composition of the present invention, tackifier resins conventionally used for adhesives can be used without particular limitations.

Examples of the (C) component include coumarone resins such as coumarone-indene resins; phenolic resins and terpenic based resins such as p-t-butylphenol-acetylene resins, phenol-formaldehyde resins, terpene-phenol resins, terpene resins, and xylene-formaldehyde resins; petroleum hydrocarbon resins such as synthetic polyterpene resins, aromatic hydrocarbon resins, aliphatic hydrocarbon resins, alicyclic hydrocarbon resins, aliphatic-alicyclic petroleum resins, aliphatic-aromatic hydrocarbon resins, hydrogenated modified alicyclic hydrocarbon resins, hydrogenated alicyclic hydrocarbon resins, hydrocarbon tackifier resins, low-molecular-weight polybutene, and low-molecular-weight atactic

polypropylene; rosin resins such as rosin esters as typified by rosin pentaerythritol esters, rosin glycerol esters, etc., hydrogenated rosins, hydrogenated rosin methyl esters, polymerized rosin pentaerythritol esters, hydrogenated rosin esters, high-melting-point ester resins, polymerized rosins, and special rosin esters. Among these (C) components, terpenic resins, hydrogenated alicyclic hydrocarbon resins, and rosin resins are preferred. These (C) components may be used alone or in combination of any two or more thereof.

In the adhesive composition, the content of the (C) component relative to 100 parts by mass of the (A) component is 10 to 500 parts by mass. When the content of the (C) component is less than 10 parts by mass, a sufficient adhesiveness cannot be obtained. When the content of the (C) component is more than 500 parts by mass, a good transferability may not be obtained. The content of the (C) component relative to 100 parts by mass of the (A) component is preferably 20 to 400 parts by mass, more preferably 30 to 300 parts by mass, and further preferably 40 to 200 parts by mass, from the viewpoints of transition performance and adhesiveness of the adhesive composition. The content of the (C) component relative to 100 parts by mass of the (A) component may be 50 to 150 parts by mass and may be 60 to 120 parts by mass.

[Other components]

In the present embodiment, the adhesive composition may contain other components such as a plasticizer, an antioxidant, a crosslinking agent, a filler, and a heat stabilizer, in addition to the (A) to (C) components.

The adhesive composition may contain a plasticizer within a range not impairing the effects of the present invention, from the viewpoints of exhibiting flexibility and easiness of imparting adhesiveness.

Examples of the plasticizer include paraffinic, naphthenic, and aromatic process oils; phthalic acid derivatives such as dioctyl phthalate and dibutyl phthalate; liquid cooligomers of ethylene and $\alpha$-olefin; liquid paraffin; polybutene; and low-molecular-weight polyisobutylene.

Among these plasticizers, paraffinic process oil; liquid cooligomers of ethylene and $\alpha$-olefin; and liquid paraffin are preferred, and paraffinic process oil is more preferred, from the viewpoint of compatibility with the (A) component and the (B) component. These plasticizers may be used alone or in combination of any two or more thereof.

When the plasticizer is added to the adhesive composition, the content of the plasticizer relative to 100 parts by mass of the (A) component is preferably 1 to 200 parts by mass, more preferably 2 to 100 parts by mass, and further preferably 5 to 80 parts by mass. When the content of the plasticizer falls within the above ranges, more excellent adhesiveness and bleed-out resistance, and molding processability of the adhesive composition are ready to be exhibited. The content of the plasticizer may be 50 parts by mass or less, 25 parts by mass or less, and 15 parts by mass or less, from the viewpoint of further improvement of bleed-out resistance.

Examples of the antioxidant include phenolic compounds, sulfur compounds, amine compounds, phosphorus compounds, amine-ketone compounds, and imidazole compounds. These antioxidants may be used alone or in combination of any two or more thereof.

More specific examples of the antioxidant include phenolic compounds such as 2,6-di-t-butyl-4-methylphenol, n-octadecyl-3-(3,5-di-t-butyl-4-hydroxyphenol) propionate, triethylene glycol-bis-[3-(3-t-butyl-5-methyl-4-hydroxyphenyl) propionate], and pentaerythritol tetrakis[3-(3,5-di-tert-butyl-4-hydroxyphenyl) propionate]; sulfur compounds such as dilauryl 3,3'-thiodipropionate, distearyl 3,3'-thiodipropionate, and pentaerythritol tetrakis(3-laurylthiopropionate); amine compounds such as octylated diphenylamine; phosphorus compounds such as tris(2,4-di-t-butylphenyl) phosphite; amine-ketone compounds such as 6-ethoxy-1,2-dihydro-2,2,4-trimethylquinoline, reaction products of diphenylamine and acetone, and 2,2,4-trimethyl-1,2-dihydroquinoline polymer; and imidazole compounds such as 2-mercaptobenzimidazole and 2-mercaptomethylbenzimidazole. Among these antioxidants, phenolic compounds are preferred.

When the antioxidant is added to the adhesive composition, the content of the antioxidant relative to 100 parts by mass of the (A) component is normally 0.05 to 5 parts by mass and preferably 0.1 to 3 parts by mass.

Examples of the crosslinking agent include metal compounds such as ZnO, CaO, PbO, $Zn(OH)_2$, $Ca(OH)_2$, $Zn(OOCH_3)_2$, $Mg(OOCH_3)_2$, $CH_3COONa$, Calcium-cured rosins (e.g., Lime Resin No. 1: manufactured by Arakawa Chemical Industries, Ltd.), zinc-cured rosins (e.g., Zinc Resin No. 3: manufactured by Arakawa Chemical Industries, Ltd.), and organic titanates (e.g., tetraisopropyl titanate (TPT), diisopropoxy bis(acetylacetonato) titanium, and Titanium Bond T-50 ((isopropanol solution of titanium-i-propoxy octylene glycolate): manufactured by Nippon Soda Co., Ltd.)); amino compounds such as triethylenetetramine (TETA), tetraethylenepentamine (TEPA), polyethyleneimine (molecular weight: about 250 to 1,800, e.g., Epomin SP series: manufactured by Nippon Shokubai Co., Ltd.), and polyamide resin (molecular weight: about 500 to 1,000); epoxy resins such as bisphenol A-type epoxy resins and bisphenol F-type epoxy resins; and isocyanate compounds such as toluene diisocyanate (TDI), diphenylmethane diisocyanate (MDI), carbodiimide modified MDI, and block isocyanates. These crosslinking agents may be used alone or in combination of any two or more thereof.

When the crosslinking agent is added to the adhesive composition, the content of the crosslinking agent relative to 100 parts by mass of the (A) component is normally 0.001 to 15 parts by mass, preferably 0.01 to 10 parts by mass, and more preferably 0.01 to 8 parts by mass.

When an epoxy resin, an isocyanate compound or the like is used as the crosslinking agent, a crosslinking promoter may be used in addition to the crosslinking agent.

When an epoxy resin is used as the crosslinking agent, examples of the crosslinking promoter include trisdimethylaminomethylphenyl. When an isocyanate compound is used as the crosslinking agent, examples of the crosslinking promoter include dibutyl tin laurate.

When the crosslinking promoter is added to the adhesive composition, the content of the crosslinking promoter relative to 100 parts by mass of the (A) component is normally 0.001 to 10 parts by mass, preferably 0.01 to 7.5 parts by mass, and more preferably 0.01 to 5 parts by mass.

Examples of the filler include talc, clay, mica, calcium silicate, calcium carbonate, magnesium carbonate, aluminum hydroxide, magnesium hydroxide, calcium hydroxide, silica, alumina, titanium oxide, iron oxide, zinc oxide, and magnesium oxide.

When the filler is added to the adhesive composition, the content of the filler relative to 100 parts by mass of the adhesive composition is preferably 20 parts by mass or less and more preferably 10 parts by mass or less.

Examples of the heat stabilizer include phosphorus heat stabilizers, lactone heat stabilizers, and hydroxy heat stabilizers.

When the heat stabilizer is added to the adhesive composition, the content of the heat stabilizer relative to 100 parts by mass of the adhesive composition is preferably 3 parts by mass or less and more preferably 2 parts by mass or less, from the viewpoint of inhibiting bleeding from the adhesive composition.

In the present embodiment, the adhesive composition may further contain other components such as a UV absorbent, a light stabilizer, a flame retardant, a pigment, a colorant, a lubricant, an antistatic agent, a water repellent, a waterproofing agent, a hydrophilizing agent, a conductivity imparting agent, a thermal conductivity imparting agent, an electromagnetic wave shieldability imparting agent, a transparency regulator, a fluorescent agent, a slidability imparting agent, a transparency imparting agent, an antiblocking agent, a metal inactivator, and a microbicide, within a range not impairing the effects of the present invention,

In the present embodiment, the total content of the solid rubber (A), the liquid polyfamesene-based rubber (B), and the tackifier resin (C) in the adhesive composition is preferably 50% by mass or more, may be 80% by mass or more, may be 85% by mass or more, may be 90% by mass or more, and may be 95% by mass or more. The upper limit value may be 100% by mass, 99.9% by mass, 99.8% by mass, and 99.5% by mass.

In the present embodiment, in the case of containing the plasticizer, the total content of the solid rubber (A), the liquid polyfarnesene-based rubber (B), and the tackifier resin (C) is preferably 50% by mass or more, may be 70% by mass or more, may be 75% by mass or more, and may be 85% by mass or more. The upper limit value may be 99% by mass, 98% by mass, 97% by mass, and 95% by mass.

[Production Method]

The adhesive composition of the present embodiment can be preferably produced by, for example, dissolving the all components of the adhesive composition in an organic solvent or the like, and removing the solvent or the like therefrom. The adhesive composition can also be produced by mixing the all components of the adhesive composition using a mixing machine or the like, followed by a melt-kneading with a single-screw extruder, a twin-screw extruder, a kneader, or the like.

As the mixing machine, a Henschel mixer, a V blender, a ribbon blender, a tumbler blender, a conical blender, or the like can be used.

<Adhesive>

The adhesive of the present embodiment is an adhesive obtained by using, in at least a part of the adhesive, the above-described adhesive composition.

The adhesive of the present embodiment can be used as, for example, a solvent-type adhesive, a hot melt adhesive, and a hot stretch adhesive.

When the adhesive of the present embodiment is used as a solvent-type adhesive, an organic solvent including aliphatic solvents such as ethyl acetate, butyl acetate, methyl ethyl ketone, methyl isobutyl ketone, methanol, ethanol, isopropyl alcohol, t-butanol, s-butanol, acetone, acetylacetone, cyclohexanone, heptane, isopentane, n-hexane, and cyclohexane, and aromatic solvents such as benzene, toluene, and ethylbenzene can be used.

When the adhesive of the present embodiment is used as a hot melt adhesive, styrene-butadiene-styrene block copolymer rubber and styrene-isoprene-styrene block copolymer rubber are preferably used as the solid rubber (A). Among these, styrene-isoprene-styrene block copolymer rubber is more preferred.

An adhesive tape or an adhesive sheet may be prepared by, for example, using the adhesive composition for the adhesive, and applying the adhesive on a substrate using a roll coater, a calender and the like.

When the adhesive tape or the adhesive sheet is prepared, examples of a material for the substrate include polyolefins such as polyethylene, polypropylene, and ethylene-propylene copolymer, ethylene-vinyl acetate copolymer, vinyl chloride, vinylidene chloride, polystyrene, polyacrylonitrile, acrylic polymer, polyester, polyurethane, polyamide, polycarbonate, and polyimide. The substrate may be formed by one of these materials, or may be formed by two or more thereof.

The substrate may be formed by a single layer or may be formed by a multilayer having two or more layers. In the case of the two or more layers, they may be formed by two or more different kinds of materials. The substrate may be subjected to various treatments, for example, punching treatment as necessary.

The adhesive of the present embodiment has excellent adhesiveness and bleed-out resistance, and exhibits peelability and transferability depending on a temperature condition. That is, depending on a temperature condition, the adhesive can be controlled so that it can be peeled off without glue residue or it can be transferred. Therefore, the adhesive of the present embodiment is also suitable to a transfer adhesive tape and a transfer adhesive sheet, in addition to an adhesive tape and an adhesive sheet.

## Examples

Hereinafter, the present invention is described in detail with reference to Examples and Comparative Examples, but the present invention is not limited thereto.

The components used in Examples and Comparative Examples are as follows.

[Solid Rubber (A)]

Natural rubber: RSS#1

Styrene-butadiene copolymer rubber: SBR1500 (manufactured by JSR Corporation, styrene content: 23% by mass, vinyl content: 15 mol%, weight-average molecular weight (Mw): 340,000, glass transition temperature: -53°C)

[Liquid Farnesene-Based Rubber (B)]

Polymers described in the later-described Production Examples 1 to 5 were used. Note that the polymer (B'-1) in Production Example 4 and the polymer (B-4) in Production Example 5 are for Comparative Examples.

[Tackifier Resin (C)]

Terpene resin: YS Resin PX1150 (trade name, manufactured by Yasuhara Chemical Co., Ltd.)

[Plasticizer]

Process oil: SUNPURE P100 (trade name, manufactured by Japan Sun Oil Company, Ltd., paraffinic process oil)

[Antioxidant]

ADK STAB AO-60 (trade name, manufactured by ADEKA Corporation, hindered phenolic compound)

<Production Examples>

[Purification Procedure of Farnesene]

β-famesene (purity: 97.6% by mass, manufactured by Amyris Biotechnology) was purified through a 3Å molecular sieve and distilled in a nitrogen atmosphere to remove hydrocarbon impurities such as zingiberene, bisabolenes, farnesene epoxides, farnesol isomers, E,E-famesol, squalene, ergosterol, and a few kinds of dimers of farnesene, thereby purifying β-farnesene.

The purified β-famesene was used for the polymerizations in Production Examples 1, 2, and 3.

[Production Example 1]: Liquid Polyfamesene (B-1)

Into a nitrogen-purged and dried pressure-tight container were charged 274 g of cyclohexane as a solvent and 1.2 g of n-butyl lithium (17% by mass hexane solution) as a polymerization initiator, the temperature was raised to 50°C,

and then 272 g of β-farnesene was added thereto at a rate of 10 mL/min and polymerized for one hour, under a stirring condition while controlling the polymerization temperature to be 50°C (polymerization step).

To the obtained polymerization reaction solution was added methanol to obtain a polymerization solution. To the polymerization solution in the pressure-tight container was added warm water of 60°C to reach a volume ratio of the polymerization solution / the warm water = 2/1, the resulting solution was stirred for 30 minutes and then left still for 30 minutes, the polymerization solution phase and water phase were confirmed to be separated, and then the water phase was removed (hereinafter these series of operations are mentioned as a washing operation (1)). The washing operation (1) was further repeated and, in total, the washing operation (1) was performed four times.

The polymerization liquid after being subjected to washing operations was vacuum dried at 70°C for 12 hours to produce liquid polyfamesene (B-1).

[Production Example 2]: Liquid Polyfarnesene-Butadiene Copolymer (B-2)

Into a nitrogen-purged and dried pressure-tight container were charged 250 g of cyclohexane as a solvent and 2.2 g of sec-butyl lithium (10.5% by mass cyclohexane solution) as a polymerization initiator, the temperature was raised to 70°C, and then a previously prepared mixture liquid of 150 g of β-farnesene and 100 g of butadiene was added thereto at a rate of 10 mL/min and polymerized for one hour, under a stirring condition while controlling the polymerization temperature to be 70°C (polymerization step).

To the obtained polymerization reaction solution was added methanol to obtain a polymerization solution. Thereafter, the washing operation (1) described in Production Example 1 was performed four times.

The polymerization liquid after being subjected to washing operations was vacuum dried at 70°C for 12 hours to produce liquid polyfamesene-butadiene copolymer (B-2).

[Production Example 3]: Liquid Polyfarnesene (B-3)

Polymerization was performed in accordance with the same polymerization step as in Production Example 1, and methanol was added to the polymerization reaction solution to stop the polymerization reaction. The polymerization solution obtained by polymerization was not washed but vacuum dried at 70°C for 12 hours to produce liquid polyfarnesene (B-3).

[Production Example 4]: Liquid Polyisoprene (B'-1)

Into a nitrogen-purged and dried pressure-tight container were charged 250 g of hexane as a solvent and 1.9 g of n-butyl lithium (17% by mass hexane solution) as a polymerization initiator, the temperature was raised to 70°C, and then 250 g of isoprene was added thereto at a rate of 10 mL/min and polymerized for one hour, under a stirring condition while controlling the polymerization temperature to be 70°C (polymerization step).

To the obtained polymerization reaction solution was added methanol to obtain a polymerization solution. Thereafter, the washing operation (1) described in Production Example 1 was performed four times.

The polymerization liquid after being subjected to washing operations was vacuum dried at 70°C for 12 hours to produce liquid polyisoprene (B'-1).

[Production Example 5]: Liquid Polyfamesene (B-4)

Into a nitrogen-purged and dried pressure-tight container were charged 274 g of cyclohexane as a solvent and 1.2 g of n-butyl lithium (17% by mass hexane solution) as a polymerization initiator, the temperature was raised to 50°C, and then 272 g of unpurified β-farnesene was added thereto at a rate of 10 mL/min and polymerized for one hour, under a stirring condition while controlling the polymerization temperature to be 50°C (polymerization step).

To the obtained polymerization reaction solution was added methanol to obtain a polymerization solution. Thereafter, the washing operation (1) described in Production Example 1 was performed four times.

The polymerization liquid after being subjected to washing operations was vacuum dried at 70°C for 12 hours to produce liquid polyfamesene (B-4).

[Evaluation of Properties (Production Examples 1 to 5)]

The polymers obtained in Production Examples 1 to 5 were subjected to evaluation of properties in accordance with the methods indicated below. The results are indicated in Table 1.

[Maximum Peak-Molecular Weight (Mt) and Molecular Weight Distribution (Mw/Mn)]

Mt and Mw/Mn of the polymers obtained in Production Examples 1 to 5 were obtained in terms of a standard polystyrene-equivalent molecular weight thereof through GPC (gel permeation chromatography). The measurement apparatus and conditions are as follows.

·Apparatus: GPC apparatus "GPC8020" manufactured by Tosoh Corporation
·Separation column: "TSKgel G4000HXL" manufactured by Tosoh Corporation
·Detector: "RI-8020" manufactured by Tosoh Corporation
·Eluent: Tetrahydrofuran
·Eluent flow rate: 1.0 mL/min
·Sample concentration: 5 mg / 10 mL
·Column temperature: 40°C

[Residual Catalyst Amount (Residual Li Amount)]

(1) Preparation of sample solution etc.

Sample solution: A precise amount of 0.5 to 5.0 g of each of the polymers obtained in Production Examples 1 to 5 was taken, and the polymer was pre-treated with a small amount of concentrated sulfuric acid, put on a platinum dish, and gradually heated with an electric stove to be converted to ash. After cooling, 5 mL of 20% (v/v) hydrochloric acid was added to the resultant, and ultrapure water was further added thereto so that the total volume reached 50 mL. The resultant solution was used as a sample solution.

Standard solution (a) (blank): To 5 mL of 20% (v/v) hydrochloric acid was added ultrapure water so that the total volume reached 50 mL.

Standard solution (b) (Li: 0.1 ppm (w/w)): Precisely 5 mL of 20% (v/v) hydrochloric acid and 0.005 mL of lithium standard liquid (1000 ppm (w/w)) were taken, and ultrapure water was added thereto so that the total volume reached 50 mL.

Standard solution (c) (Li: 2.0 ppm (w/w)): Precisely 5 mL of 20% (v/v) hydrochloric acid and 0.10 mL of lithium standard liquid (1000 ppm (w/w)) were taken, and ultrapure water was added thereto so that the total volume reached 50 mL.

Standard solution (d) (Li: 5.0 ppm (w/w)): Precisely 5 mL of 20% (v/v) hydrochloric acid and 0.25 mL of lithium standard liquid (1000 ppm (w/w)) were taken, and ultrapure water was added thereto so that the total volume reached 50 mL.

(2) Measurement method

The residual catalyst amount was obtained by calibration curve method of atomic absorption spectrophotometry frame method (frame: air-acetylene (wavelength: 670.8 nm)). Absorbances of the standard solutions (a), (b), (c), and (d) are measured in this order to create a calibration curve. Then, the absorbance of the sample solution was measured and residual lithium catalyst amount per 1 g of the polymer obtained in Production Examples 1 to 5 was calculated by the formula below. For measuring the absorbance, a polarized Zeeman atomic absorption spectrophotometer (type "Z-5010" manufactured by Hitachi High-Technologies Corporation) was used. As the lithium standard liquid for atomic absorption, a product manufactured by Wako Pure Chemical Corporation was used.

$$\text{Residual catalyst amount [lithium: ppm (w/w)]} = [C / \text{sampling amount (g)}] \times 50$$

(C = lithium concentration (ppm (w/w)) in the measured liquid)

[Melt Viscosity]

The melt viscosity at 38°C of each of the polymers obtained in Production Examples 1 to 5 was measured with a Brookfield-type viscometer (manufactured by Brookfield Engineering Labs. Inc.).

[Glass Transition Temperature (Tg)]

In an aluminum open pan was put 10 mg of each of the polymers obtained in Production Examples 1 to 5, and

an aluminum lid was placed on the pan, followed by crimping with a sample sealer. A thermogram was measured by differential scanning calorimetry (DSC) under the temperature raising rate condition of 10°C/min, and the value at the peak top of DSC was determined as the glass transition temperature (Tg). The measurement apparatus and conditions are as follows.

[Measurement Apparatus and Measurement Conditions]

·Apparatus: Differential scanning calorimeter "DSC6200" manufactured by Seiko Instruments Inc.
·Cooling apparatus: Cooling controller manufactured by Seiko Instruments Inc.
·Detection unit: Heat flow rate type
·Sample weight: 10 mg
·Temperature raising rate: 10°C/min
·Cooling condition: 10°C/min; after cooling, the temperature was kept equal at -130°C for 3 minutes, and then the temperature raising was started.
·Reference container: Aluminum
·Reference weight: 0 mg

Table 1

| | Maximum peak-molecular weight (Mt) | Weight-average molecular weight (Mw) | Number-average molecular weight (Mn) | Molecular weight distribution (Mw/Mn) | Residual Li amount (ppm by mass) | Melt viscosity (38°C) (Pa·s) | Tg (°C) |
|---|---|---|---|---|---|---|---|
| Liquid polyfamesene (B-1) | 155,000 | 135,000 | 113,000 | 1.19 | 5 | 69 | -71 |
| Liquid polyfamesene-butadiene copolymer (B-2) | 98,000 | 98,000 | 93,000 | 1.05 | 6 | 603 | -78 |
| Liquid polyfarnesene (B-3) | 155,000 | 135,000 | 113,000 | 1.19 | 70 | 68 | -71 |
| Liquid polyisoprene (B'-1) | 74,000 | 66,000 | 58,000 | 1.13 | 1 | 480 | -63 |
| Liquid polyfamesene (B-4) | 141,000 | 146,000 | 101,000 | 1.45 | 6 | 35 | -70 |

<Examples 1 to 6 and Comparative Examples 1 to 6>

In accordance with the blending amounts indicated in Table 2 and Table 3, all components were charged into a beaker, diluted with toluene, and dissolved while stirring. Here, the amount was adjusted so that the solution met the proportion of 20% mass of adhesive composition and 80% mass of toluene to prepare an adhesive composition solution. The adhesive composition solution was stirred using a three-one motor at a rotation number of 300 rpm and dissolved until no residual dissolved material could be seen visually. Next, the adhesive composition solution was applied on a PET film (substrate) using an applicator having a thickness of 0.5 mm, followed by drying at room temperature for two days to prepare an adhesive sheet including the substrate and an adhesive layer formed thereon.

[Evaluation Method]

The adhesive sheets obtained in Examples and Comparative Examples were subjected to evaluation of properties in accordance with the methods indicated below. The results are indicated in Tables 2 and 3.

[Adhesiveness and Peeling Mode Evaluations]

Each of the adhesive sheets obtained in Examples 1 to 3 and Comparative Examples 1 to 3 was attached on an adherend (SUS: BA304, stainless plate) in such a manner that the adhesive layer of the adhesive sheet could be brought in contact with the adherend, followed by cutting into a width of 24 mm to obtain a sample.
Using the sample, in accordance with JIS Z 0237 (2009), and using the measurement conditions and measurement apparatus below, 180° peel strength between the adhesive sheet and the adherend was measured, and adhesiveness (at 23°C (room temperature) and at 60°C), peeling mode (at 23°C and at 60°C), and transferability of the adhesive layer (at 60°C) were evaluated.

(Measurement Conditions and Measurement Apparatus)

Measurement conditions:

Test temperature: 23°C, 60°C
Test speed: 300 mm/min
Sample width: 24 mm
Number of measurements: N = 5
Measured displacement: 23°C, 60°C: 50 mm to 150 mm

Measurement apparatus:

23°C: "Universal material testing machine; type 5966" manufactured by Instron
60°C: "Universal material testing machine; type 59R5582" manufactured by Instron

In the above evaluation, the average of five measurements was taken as the adhesiveness. As the peeling mode, interfacial peeling and cohesion failure were visually observed. As the transferability of the adhesive layer, whether the adhesive layer remained on the adherend after peeling was visually observed and an evaluation was performed based on the following evaluation criteria.

(Evaluation Criteria for Transferability of Adhesive Layer)

A: 80% or more of adhesion area was transferred to the adherend.
B: More than 1% and less than 80% of adhesion area was transferred to the adherend.
C: 1% or less of adhesion area was transferred to the adherend (including the case where no adhesive layer could be visually observed on the adherend).

[Bleeding-Out Evaluation]

(1) Transferability to copier paper

Each of the adhesive sheets obtained in Examples 1 to 6 and Comparative Examples 1 to 6 was cut into a strip form having a width of 25 mm and a length of 100 mm, and pressure-bonded to a fine paper (KB paper manufactured by Kokuyo Co., Ltd.) under the environment of 23 $\pm$ 2°C and a relative humidity of 65 $\pm$ 15%, by reciprocating a roller of 2 kg once at a speed of about 50 mm/sec, followed by leaving for 30 minutes. The adhesive sheet pressure-bonded with the fine paper was left still under the environment of 23 $\pm$ 2°C and a relative humidity of 65 $\pm$ 15% for one week, and whether the components contained in the adhesive composition transferred from the adhesive to the fine paper was visually observed.
In the visual observation, the case where a stain was observed on the fine paper was evaluated that the

components transferred to the fine paper and indicated as "present", and the case where no stain was observed on the fine paper was evaluated that the components did not transfer to the fine paper and indicated as "absent". (2) Weight change by transferring to EPDM sheet

An EPDM sheet (type No. EB270N: thickness 2 mm, width 100 mm, length 300 mm) to be used was soaked in toluene solvent for 12 hours and dried at 100°C for 3 hours in advance in order to extract low molecular materials contained in the EPDM sheet. During the soaking in toluene, the EPDM sheet was fixed with a metal weight so that it would not float.

Each of the adhesive sheets obtained in Examples 1 to 6 and Comparative Examples 1 to 6 was cut into a strip form having a width of 24 mm and a length of 50 mm. The adhesive sheet having been cut was pressure-bonded to the EPDM sheet under the environment of 23 ± 2°C and a relative humidity of 65 ± 15%, by reciprocating a roller of 2 kg once at a speed of about 50 mm/sec, followed by leaving for 30 minutes. Then, the adhesive sheet pressure-bonded with the EPDM sheet was heated in a Geer oven (heating temperature: 50°C) for 15 hours. After heating, the sample was left still at 23°C for one hour, and the adhesive sheet was peeled off. A change of the weight of the EPDM sheet was measured and whether the components contained in the adhesive composition transferred from the adhesive layer to the EPDM sheet was observed in terms of the change of the weight (weight change by transferring).

The weight change by transferring was calculated as the following, based on the

<Property Values of Adhesive Layer> below.

When assuming that the whole quantity of the (B) component (each of the polymers obtained in Production Examples 1 to 5) and the plasticizer bled out, the theoretical weight change amount would be calculated as 11.05 mg in Examples 1 to 3 and Comparative Examples 1 to 3, and 24.03 mg in Examples 4 to 6 and Comparative Examples 4 to 6. The rate of the weight change amount value of the EPDM sheet actually measured (weight change by transferring [mg]) to the theoretical weight change amount was calculated and the obtained value was taken as the weight change by transferring [% by mass].

<Property Values of Adhesive Layer>

Width: 24 mm
Length: 50 mm
Thickness: 0.5 mm
Volume: 600 $mm^3$
Density: 0.000923 $g/mm^3$ (theoretical value)
Weight: 0.11076 g (theoretical value)

·The "Density" is a theoretical value calculated by a weighted average from the blending amounts of the components in Examples and Comparative Examples.
·The "Weight" is a theoretical value after volatilization of the toluene (volume × density × 0.2% by mass).

In the bleeding-out evaluation, the "components contained in the adhesive composition" that transferring is presumed to be the (B) component and the plasticizer, and thus the components mean the (B) component and the plasticizer. When either one of the (B) component and the plasticizer was blended, the transferring of the either one component is meant, and when both of them were blended, the transferring of the both is meant.

Table 2

| | Ex. 1 | Ex. 2 | Ex. 3 | Com. Ex. 1 | Com. Ex. 2 | Com. Ex. 3 |
|---|---|---|---|---|---|---|
| Solid rubber (A): natural rubber [parts by mass] | 100 | 100 | 100 | 100 | 100 | 100 |
| Liquid polyfamesene (B-1) [parts by mass] | 10 | | | | | |
| Liquid polyfamesene-butadiene copolymer (B-2) [parts by mass] | | 10 | | | | |

(continued)

| | | Ex. 1 | Ex. 2 | Ex. 3 | Com. Ex. 1 | Com. Ex. 2 | Com. Ex. 3 |
|---|---|---|---|---|---|---|---|
| Liquid polyfamesene (B-3) [parts by mass] | | | | 10 | | | |
| Liquid polyisoprene (B'-1) [parts by mass] | | | | | | 10 | |
| Liquid polyfamesene (B-4) [parts by mass] | | | | | | | 10 |
| Tackifier resin (C) [parts by mass] | | 80 | 80 | 80 | 80 | 80 | 80 |
| Plasticizer [parts by mass] | | 10 | 10 | 10 | 20 | 10 | 10 |
| Antioxidant [parts by mass] | | 0.5 | 0.5 | 0.5 | 0.5 | 0.5 | 0.5 |
| Adhesiveness and peeling mode evaluations | | | | | | | |
| 23°C | Adhesiveness (SUS substrate) [N/cm] | 3.7 | 3.6 | 3.4 | 3.1 | 4.1 | 3.5 |
| | Peeling mode | Interfacial peeling | Interfacial peeling | Interfacial peeling | Interfacial peeling | Interfacial peeling | Interfacial peeling |
| 60°C | Adhesiveness (SUS substrate) [N/cm] | 1.2 | 4.2 | 0.9 | 2.5 | 3.5 | 1.0 |
| | Peeling mode | Cohesion failure | Cohesion failure | Cohesion failure | Interfacial peeling | Interfacial peeling | Cohesion failure |
| | Transferability of adhesive layer | A | A | A | C | C | A |
| Bleeding-out evaluation | | | | | | | |
| Transferability to copier paper (presence/absence of stain) | | Absent | Absent | Absent | Present | Absent | Present |
| Weight change by transferring to EPDM sheet [mg] | | 0.5 | 0.8 | 0.6 | 6.3 | 0.9 | 3.5 |
| Weight change by transferring to EPDM sheet [% by mass] | | 4.5 | 7.2 | 5.4 | 57.0 | 8.1 | 31.7 |

Examples 1 to 3 were excellent in the adhesiveness at 23°C, and an interfacial peeling occurred and no adhesive layer remained on the adherend. When performing a peeling in Examples 1 to 3 while raising the temperature to 60°C, a cohesion failure occurred and the adhesive layer was able to be transferred to the adherend. In this manner, it is found that the adhesive compositions of Examples in Table 2 were able to exhibit peelability and transferability depending on a temperature condition. Additionally, Examples 1 to 3 are found to be excellent in bleed-out resistance according to Table 2.

In contrast, when performing a peeling in Comparative Examples 1 and 2, interfacial peeling occurred even if the temperature was raised to 60°C, and it is thus found that Comparative Examples 1 and 2 were difficult to exhibit peelability and transferability depending on a temperature condition. It is found that Comparative Examples 1 and 3 were

poor in bleed-out resistance compared to Examples 1 to 3, according to Table 2.

Table 3

| | Ex. 4 | Ex. 5 | Ex. 6 | Com. Ex. 4 | Com. Ex. 5 | Com. Ex. 6 |
|---|---|---|---|---|---|---|
| Solid rubber (A): natural rubber [parts by mass] | 100 | 100 | 100 | 100 | 100 | 100 |
| Liquid polyfamesene (B-1) [parts by mass] | 50 | | | | | |
| Liquid polyfamesene-butadiene copolymer (B-2) [parts by mass] | | 50 | | | | |
| Liquid polyfamesene (B-3) [parts by mass] | | | 50 | | | |
| Liquid polyisoprene (B'-1) [parts by mass] | | | | | 50 | |
| Liquid polyfamesene (B-4) [parts by mass] | | | | | | 50 |
| Tackifier resin (C) [parts by mass] | 80 | 80 | 80 | 80 | 80 | 80 |
| Plasticizer [parts by mass] | | | | 50 | | |
| Antioxidant [parts by mass] | 0.5 | 0.5 | 0.5 | 0.5 | 0.5 | 0.5 |
| Bleeding-out evaluation | | | | | | |
| Transferability to copier paper (presence/absence of stain) | Absent | Absent | Absent | Present | Absent | Present |
| Weight change by transferring to EPDM sheet [mg] | 0.8 | 1.6 | 0.9 | 13.8 | 1.8 | 8.1 |
| Weight change by transferring to EPDM sheet [% by mass] | 3.3 | 6.7 | 3.7 | 57.4 | 7.5 | 33.7 |

According to Table 3, it is found that Examples 4 to 6 were excellent in bleed-out resistance.

In contrast, it is found that Comparative Examples 4 to 6 were poor in bleed-out resistance compared to Examples 4 to 6.

<Examples 7 to 9>

In accordance with the blending amounts indicated in Table 4, adhesive sheets were prepared by the same method as in Example 1. The obtained adhesive sheets were subjected to the above-described [Adhesiveness and Peeling Mode Evaluations]. The results are indicated in Table 4.

Table 4

| | Ex. 7 | Ex. 8 | Ex. 9 |
|---|---|---|---|
| Solid rubber (A): styrene-butadiene copolymer rubber [parts by mass] | 100 | 100 | 100 |
| Liquid polyfamesene (B-1) [parts by mass] | 10 | | |
| Liquid polyfarnesene-butadiene copolymer (B-2) [parts by mass] | | 10 | |
| Liquid polyfamesene (B-3) [parts by mass] | | | 10 |
| Tackifier resin (C) [parts by mass] | 80 | 80 | 80 |
| Plasticizer [parts by mass] | 10 | 10 | 10 |

(continued)

| | | Ex. 7 | Ex. 8 | Ex. 9 |
|---|---|---|---|---|
| Antioxidant [parts by mass] | | 1 | 1 | 1 |
| Adhesiveness and peeling mode evaluations | | | | |
| 23°C | Adhesiveness (SUS substrate) [N/cm] | 0.2 | 0.2 | 0.2 |
| | Peeling mode | Interfacial peeling | Interfacial peeling | Interfacial peeling |
| 60°C | Adhesiveness (SUS substrate) [N/cm] | 1.6 | 3.8 | 1.5 |
| | Peeling mode | Cohesion failure | Cohesion failure | Cohesion failure |
| | Transferability of adhesive layer | A | A | A |

In Examples 7 to 9, an interfacial peeling occurred at 23°C and no adhesive layer remained on the adherend, according to Table 4. When performing a peeling in Examples 7 to 9, while raising the temperature to 60°C, a cohesion failure occurred and the adhesive layer was able to be transferred to the adherend. In this manner, it is found that the adhesive compositions of Examples in Table 4 exhibitedre peelability and transferability depending on a temperature condition.

Industrial Applicability

The adhesive composition of the present embodiment, while having excellent adhesiveness and bleed-out resistance, can control the transfer condition of the adhesive layer by the temperature condition. Therefore, the adhesive composition and the adhesive of the present embodiment are suitable to an adhesive tape and an adhesive sheet, and a transfer adhesive tape and a transfer adhesive sheet.

**Claims**

**1.** An adhesive composition comprising, at least one solid rubber (A) selected from the group consisting of a natural rubber, a polyisoprene rubber, a polybutadiene rubber, a styrene-butadiene copolymer rubber, a styrene-isoprene copolymer rubber, an acrylonitrile-butadiene copolymer rubber, a chloroprene rubber, an ethylene-propylene rubber, and a butyl rubber, and

5 to 250 parts by mass of a liquid farnesene-based rubber (B) and 10 to 500 parts by mass of a tackifier resin (C), relative to 100 parts by mass of the solid rubber (A),
wherein the liquid farnesene-based rubber (B) meets the following requirements (I) and (II):

(I) a melt viscosity measured at 38°C is in a range of 0.1 to 3,000 Pa·s; and
(II) when a measurement is performed through a gel permeation chromatography (GPC), a maximum peak-molecular weight (Mt) is 3,000 to 200,000 and a molecular weight distribution (Mw/Mn) is 1.0 to 1.4.

**2.** The adhesive composition according to claim 1, wherein the liquid farnesene-based rubber (B) has a residual catalyst amount derived from a polymerization catalyst used for producing the liquid farnesene-based rubber (B) of 0 to 200 ppm by mass in terms of a metal.

**3.** The adhesive composition according to claim 1 or 2, wherein the liquid farnesene-based rubber (B) has the maximum peak-molecular weight (Mt) of 60,000 or more.

**4.** The adhesive composition according to any one of claims 1 to 3, wherein the liquid farnesene-based rubber (B) comprises a monomer unit (a) derived from a farnesene in an amount of 50% by mass or more.

**5.** The adhesive composition according to any one of claims 1 to 4, further comprising 1 to 200 parts by mass of a plasticizer relative to 100 parts by mass of the solid rubber (A).

**6.** The adhesive composition according to any one of claims 1 to 5, wherein the solid rubber (A) is a natural rubber.

**7.** The adhesive composition according to any one of claims 1 to 5, wherein the solid rubber (A) is at least one selected from the group consisting of a polybutadiene rubber and a styrene-butadiene copolymer rubber.

**8.** An adhesive obtained by using, in at least a part of the adhesive, the adhesive composition according to any one of claims 1 to 7.

## INTERNATIONAL SEARCH REPORT

International application No.
**PCT/JP2022/023047**

**A. CLASSIFICATION OF SUBJECT MATTER**

***C09J 11/08***(2006.01)i; ***C09J 107/00***(2006.01)i; ***C09J 109/00***(2006.01)i; ***C09J 109/02***(2006.01)i; ***C09J 109/06***(2006.01)i; ***C09J 111/00***(2006.01)i; ***C09J 123/16***(2006.01)i; ***C09J 123/22***(2006.01)i; ***C09J 153/02***(2006.01)i
FI: C09J11/08; C09J153/02; C09J107/00; C09J109/02; C09J109/06; C09J109/00; C09J111/00; C09J123/16; C09J123/22

According to International Patent Classification (IPC) or to both national classification and IPC

**B. FIELDS SEARCHED**

Minimum documentation searched (classification system followed by classification symbols)

C09J11/08; C09J107/00; C09J109/00; C09J109/02; C09J109/06; C09J111/00; C09J123/16; C09J123/22; C09J153/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2012-502135 A (AMYRIS BIOTECHNOLOGIES, INC.) 26 January 2012 (2012-01-26) claims, paragraph [0002], example 3 | 1-8 |
| Y | WO 2019/230700 A1 (KURARAY CO., LTD.) 05 December 2019 (2019-12-05) claims, paragraph [0015], examples 7, 8 | 1-8 |
| Y | JP 2015-86281 A (KURARAY CO., LTD.) 07 May 2015 (2015-05-07) claims, paragraph [0008], examples 1, 2 | 1-8 |
| Y | JP 2002-69405 A (NITTO DENKO CORP) 08 March 2002 (2002-03-08) claims, paragraph [0009], examples 1, 2 | 1-8 |
| Y | JP 2015-105277 A (KURARAY CO., LTD.) 08 June 2015 (2015-06-08) claims, paragraph [0041], examples 1-6 | 2-8 |
| A | WO 2020/206309 A1 (FINA TECHNOLOGY, INC) 08 October 2020 (2020-10-08) claims, examples 3, 5, 6, 12, 13 | 1-8 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 July 2022** | **02 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

## INTERNATIONAL SEARCH REPORT

International application No.
**PCT/JP2022/023047**

### C. DOCUMENTS CONSIDERED TO BE RELEVANT

| Category* | Citation of document, with indication, where appropriate, of the relevant passages | Relevant to claim No. |
|---|---|---|
| A | WO 2014/156651 A1 (KURARAY CO., LTD.) 02 October 2014 (2014-10-02) claims, examples 1-22 | 1-8 |
| A | WO 2015/087955 A1 (KURARAY CO., LTD.) 18 June 2015 (2015-06-18) claims, examples 1-12 | 1-8 |
| A | WO 2016/125899 A1 (KURARAY CO., LTD.) 11 August 2016 (2016-08-11) claims, examples 1-61 | 1-8 |

Form PCT/ISA/210 (second sheet) (January 2015)

**INTERNATIONAL SEARCH REPORT**
**Information on patent family members**

International application No.
**PCT/JP2022/023047**

| Patent document cited in search report | Publication date (day/month/year) | Patent family member(s) | Publication date (day/month/year) |
|---|---|---|---|
| JP 2012-502135 A | 26 January 2012 | US 2010/0331511 A1<br>claims, paragraph [0007], example 3<br>WO 2010/027463 A1<br>EP 2334707 A<br>AU 2009288675 A<br>CA 2735255 A<br>KR 10-2011-0065505 A<br>CN 102203145 A<br>TW 201026773 A<br>KR 10-2011-0065502 A | |
| WO 2019/230700 A1 | 05 December 2019 | US 2021/0222036 A1<br>claims, paragraph [0033], examples 7, 8<br>EP 3805451 A1<br>CN 112204192 A<br>KR 10-2021-0014107 A<br>CA 3101958 A<br>TW 202012137 A | |
| JP 2015-86281 A | 07 May 2015 | (Family: none) | |
| JP 2002-69405 A | 08 March 2002 | US 2002/0045043 A1<br>claims, paragraph [0011], examples 1, 2<br>EP 1186644 A2<br>AU 6547901 A<br>CA 2356237 A1 | |
| JP 2015-105277 A | 08 June 2015 | (Family: none) | |
| WO 2020/206309 A1 | 08 October 2020 | US 2020/0317904 A1<br>CN 113692426 A<br>CA 3134508 A<br>TW 202043357 A<br>JP 2022-526605 A | |
| WO 2014/156651 A1 | 02 October 2014 | US 2016/0053144 A1<br>claims, examples 1, 2<br>EP 2980175 A1<br>CA 2907822 A<br>KR 10-2015-0135300 A<br>CN 105308139 A<br>TW 201446906 A | |
| WO 2015/087955 A1 | 18 June 2015 | US 2016/0312023 A1<br>claims, examples 1-12<br>EP 3081594 A1<br>CA 2933267 A<br>CN 105934479 A<br>KR 10-2016-0098234 A<br>TW 201529692 A | |
| WO 2016/125899 A1 | 11 August 2016 | US 2018/0030194 A1<br>claims, examples 1-61<br>EP 3255073 A1<br>CA 2975863 A<br>CN 107207685 A | |

Form PCT/ISA/210 (patent family annex) (January 2015)

**INTERNATIONAL SEARCH REPORT**
**Information on patent family members**

International application No.
**PCT/JP2022/023047**

| Patent document cited in search report | Publication date (day/month/year) | Patent family member(s) | Publication date (day/month/year) |
|---|---|---|---|
| | | KR 10-2017-0115538 A | |
| | | TW 201634506 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012502135 T
- JP 2015086281 A
- JP 2015105277 A
- JP 2011132298 A